# EUROPÄISCHE PATENTSCHRIFT

(11) **EP 1 111 208 B1**
(45) Veröffentlichungstag und Bekanntmachung des Hinweises auf die Patenterteilung: **03.03.2004**
(21) Anmeldenummer: 00122397.3
(22) Anmeldetag: 26.10.2000
(51) Int. Cl.: F01N 3/08, F02D 41/02, B01D 53/94, F02D 21/08, F02D 35/00

(54) **Verfahren zur Regelung eines Arbeitsmodus einer Verbrennungskraftmaschine eines Kraftfahrzeuges während einer Regeneration eines in einem Abgaskanal angeordneten Speicherkatalysators**
Method for regulating a work mode of an internal combustion engine during regeneration of a storage type catalytic converter arranged in an exhaust channel
Procédé de réglage d'un mode de fonctionnement d'un moteur à combustion interne pendant la régénération d'un catalyseur à stockage placé dans un tuyau d'échappement

(30) Priorität: 06.11.1999 DE 19953480
(43) Veröffentlichungstag der Anmeldung: 27.06.2001
(73) Patentinhaber: Volkswagen Aktiengesellschaft, 38436 Wolfsburg (DE)
(72) Erfinder: Bosse, Rolf, Dr., 38440 Wolfsburg (DE); Klarhoefer, Christian, Dr., 38440 Wolfsburg (DE)
(74) Vertreter: Schneider, Henry, Dipl.-Ing.

(56) Entgegenhaltungen:
- EP-A- 0 752 521
- EP-A- 0 860 594
- EP-A- 0 926 327
- DE-C- 19 716 275
- US-A- 5 595 060
- PATENT ABSTRACTS OF JAPAN vol. 018, no. 548 (M-1689), 19. Oktober 1994 (1994-10-19) & JP 06 193487 A (TOYOTA MOTOR CORP), 12. Juli 1994 (1994-07-12)
- PATENT ABSTRACTS OF JAPAN vol. 018, no. 389 (M-1642), 21. Juli 1994 (1994-07-21) & JP 06 108824 A (TOYOTA MOTOR CORP), 19. April 1994 (1994-04-19)

## Beschreibung

Die Erfindung betrifft ein Verfahren zur Regelung eines Arbeitsmodus einer Verbrennungskraftmaschine eines Kraftfahrzeuges während einer Regeneration eines in einem Abgaskanal der Verbrennungskraftmaschine angeordneten Speicherkatalysators mit den im Oberbegriff des Anspruchs 1 genannten Merkmalen.

Es ist bekannt, ein Abgas, das während eines Verbrennungsvorganges eines Luft-Kraftstoff-Gemisches in der Verbrennungskraftmaschine entsteht, durch in einem Abgaskanal angeordnete Katalysatoren zu reinigen. Entsprechend einem Arbeitsmodus der Verbrennungskraftmaschine entstehen unterschiedliche Schadstoffe. So werden in einem Arbeitsmodus mit λ ≤ 1, bei dem ein Kraftstoffgehalt einem Sauerstoffgehalt überwiegt beziehungsweise stöchiometrische Verhältnissen vorliegen, in einem vermehrten Maße Reduktionsmittel, wie CO, HC oder H₂, gebildet. Diese werden, sofern ausreichend Sauerstoff an dem Katalysator vorhanden ist, zu Kohlendioxid und Wasser oxidiert. Weiterhin entsteht während des Verbrennungsvorganges NOₓ, welches zumindest größtenteils bei λ ≤ 1 mit Hilfe der Reduktionsmittel an dem Katalysator zu Stickstoff reduziert werden kann (Regenerationsbetrieb des Speicherkatalysators).

Zwar ist im Regenerationsbetrieb eine relativ niedrige Schadstoffemission stromab der Katalysatoren möglich, jedoch hat es sich gezeigt, dass ein Kraftstoffverbrauch unter diesem Arbeitsmodus erhöht ist gegenüber einem sogenannten Magerbetrieb. Im Magerbetrieb übersteigt der Sauerstoffgehalt den Kraftstoffgehalt im Luft-Kraftstoff-Gemisch und Lambda ist größer 1. Hierbei sinkt ein Gehalt der Reduktionsmittel, insbesondere von CO, stark ab, so dass eine ausreichende Reduktion von NOₓ im Katalysator nicht gewährleistet ist. Es ist daher bereits bekannt, zusätzlich in den Abgaskanal einen NOₓ-Speicher, der mit dem Katalysator zusammengefasst werden kann, anzuordnen (NOₓ-Speicherkatalysator). Im Magerbetrieb kann dieser Speicherkatalysator allerdings NOₓ nur so lange absorbieren, bis eine NOₓ-Desorptionstemperatur überschritten wird oder eine NOₓ-Speicherfähigkeit erschöpft ist. Vor diesem Zeitpunkt muss der NOₓ-Speicherkatalysator daher regeneriert werden, indem ein Wechsel in den Regenerationsbetrieb erfolgt. In diesem Regenerationsbetrieb findet dann eine NOₓ-Desorption unter gleichzeitiger katalytischer Umsetzung des NOₓ statt. Die Regeneration erfordert daher in jedem Falle einen Arbeitsmodus der Verbrennungskraftmaschine mit λ ≤ 1.

Bekannt ist, den Regenerationsbetrieb dadurch zu erreichen, dass eine Ansaugluftzufuhr zu der Brennkraftmaschine durch Betätigen einer im Ansaugkanal angeordneten Drosselklappe gedrosselt wird. Durch Drosselung der Drosselklappe kommt es zu einer Reduzierung einer Sauerstoffzufuhr und einer Erhöhung der Einspritzmenge an Kraftstoff, so dass die Verbrennungskraftmaschine in den fetten Bereich mit λ ≤ 1 übergeht. Nachteilig hierbei ist, dass es im Zuge des Wechsels in den Regenerationsbetrieb auch zu einer Änderung eines Drehmomentes der Verbrennungskraftmaschine kommt. Um ein mit dieser Drehmomentänderung verbundenes Ruckeln, Vibrieren oder dergleichen des Kraftfahrzeuges zu vermeiden, ist bekannt, den Regenerationsbetrieb mit einer Drehmomentregelung zu kombinieren, wobei eine Menge des eingespritzten Kraftstoffs reduziert wird. Dies hat wiederum zum Nachteil, dass die Menge an zur Verfügung gestellten Reduktionsmitteln, insbesondere von CO, reduziert ist, so dass sich die Zeitdauer der Regeneration des NOₓ-Speicherkatalysators verlängert.

Weiterhin ist bekannt, den Regenerationsbetrieb durch Ergreifung steuerungs- und regelungstechnischer Maßnahmen mit Hinsicht auf eine möglichst optimale Wiederherstellung der NOₓ-Speicherkapazität zu optimieren. Beispielhaft sei hier die Patentschrift DE 197 16 275 C1 aufgeführt. Auch bekannt ist es, die Regenerationsbedingungen durch Eingriffe in die Abgasrückführung einzustellen beziehungsweise zu beeinflussen. Aus den Schriften DE 196 36 040 A1 und DE 196 36 790 A1 lassen sich beispielhaft die notwendigen Regelungseingriffe während einer solchen Regeneration entnehmen. In eben gleicher Weise zeigt auch die Patentschrift DE 195 43 219 C1 ein Verfahren, bei dem eine Regeneration des Speicherkatalysators unter anderem durch Regelung der Abgasrückführeinrichtung erfolgt. Alle diese Verfahren beschränken sich entweder bewusst auf Schub-, Leerlauf- oder Teillastphasen oder verzichten gänzlich auf eine Berücksichtigung der Momentenwirkung der Regeneration. In vorgenannten Betriebsphasen der Verbrennungskraftmaschine sind die Auswirkungen der Regenerationsmaßnahmen auf das zum Antrieb des Kraftfahrzeuges eingeforderte Drehmoment naturgemäß sehr gering. Soll allerdings in anderen Betriebsphasen der Verbrennungskraftmaschine die Regeneration vollständig durchgeführt werden oder ändern sich die Betriebsbedingungen während der Regeneration, so können häufig störende Momentensprünge auftreten.

Ein gattungsgemässes Verfahren ist auch aus der EP 0 926 327 A2 bekannt.

Der Erfindung liegt die Aufgabe zugrunde, ein Verfahren der gattungsgemäßen Art anzugeben, bei dem in einfacher Weise ein Regenerationsbetrieb unter gleichzeitiger Kompensation einer Drehmomentschwankung erzielt werden kann.

Erfindungsgemäß wird diese Aufgabe durch ein Verfahren mit den im Anspruch 1 genannten Merkmalen gelöst. Dadurch, dass im Regenerationsbetriebe die Drosselung der Ansaugluftzufuhr und die Durchführung der Abgasrückführung derart aufeinander abgestimmt werden, wird vorteilhaft erreicht, dass eine genügend große Menge an Reduktionsmitteln, insbesondere CO, zur Verfügung steht, die zur Regeneration des NOₓ-Speicherkatalysators führt, und gleichzeitig das Motordrehmoment konstant gehalten werden kann, so dass der Fahrer den Regenerationsvorgang nicht bemerkt.

Insbesondere wird durch eine geregelte Abgaszuführung während des Regenerationsbetriebes möglich, die Drehmomentstabilisierung ausschließlich durch die Abstimmung des Luft-Kraftstoff-Verhältnisses während des Regenerationsbetriebes zu erreichen, während die Bereitstellung der notwendigen CO-Durchströmung durch die geregelte Abgasrückführung erfolgt. Über einfache Ermittlung des Lambdawertes, beispielsweise durch Messen oder Berechnen, kann die notwendige, über das Abgas zuzuführende CO-Durchflussmenge eingestellt werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Anordnung einer Abgasanlage eines Kraftfahrzeuges;
- Figur 2: die zeitlichen Verläufe verschiedener physikalischer Größen während eines Schubbetriebes der Verbrennungskraftmaschine und
- Figur 3: die zeitlichen Verläufe verschiedener physikalischer Größen während eines Teillastbetriebes der Verbrennungskraftmaschine.

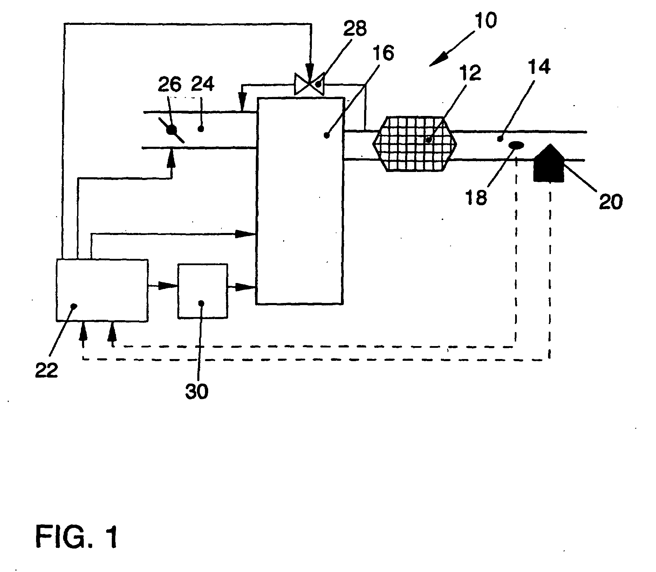

Figur 1 zeigt schematisch eine Anordnung 10 eines NOₓ-Speicherkatalysators 12 in einem Abgaskanal 14 einer Verbrennungskraftmaschine 16. Bei der Verbrennungskraftmaschine 16 handelt es sich um eine selbstzündende Verbrennungskraftmaschine (Dieselmotor). Stromab des NOₓ-Speicherkatalysators 12 sind ein Temperatursensor 18 und ein Gassensor 20 in dem Abgaskanal 14 angeordnet. In einem Ansaugkanal 24 der Verbrennungskraftmaschine 16 ist eine Drosselklappe 26 angeordnet. Der Abgaskanal 14 ist mit dem Ansaugkanal 24 über ein regelbares Abgasrückführungsventil 28 verbunden. Der Verbrennungskraftmaschine 16 ist ein Motorsteuergerät 22 zugeordnet, das einerseits über Signalleitungen mit dem Temperatursensor 18 und dem Gassensor 20, andererseits über Steuerleitungen mit der Drosselklappe 26 und dem Abgasrückführungsventil 28 verbunden ist. Ferner ist durch das Motorsteuergerät 22 ein Kraftstoffeinspritzsystem 30 ansteuerbar.

Die in Figur 1 schematisch dargestellte Anordnung 10 zeigt folgende Funktion. Hierbei werden nachfolgend nur die für die Erläuterung der Erfindung wesentlichen Funktionen erläutert, wobei klar ist, dass weitere Steuer-, Regel- und Betriebsfunktionen erzielbar sind.

Während eines bestimmungsgemäßen Einsatzes der Verbrennungskraftmaschine 16 wird zur Minderung eines Kraftstoffverbrauchs ein Arbeitsmodus mit λ > 1 (Magerbetrieb) eingestellt. Hierbei wird während des Verbrennungsprozesses entstandenes NOₓ und SOₓ als Nitrat beziehungsweise Sulfat im NOₓ-Speicherkatalysator 12 absorbiert. Im Magerbetrieb ist der Anteil der Reduktionsmittel, beispielsweise CO, HC oder H₂, gering. Eine vollständige Reduktion von NOₓ beziehungsweise SOₓ ist daher im Magerbetrieb der Verbrennungskraftmaschine 16 nicht möglich. Die nicht reduzierten NOₓ beziehungsweise SOₓ werden im NOₓ-Speicherkatalysator 12 gespeichert. Eine Speicherkapazität des NOₓ-Speicherkatalysators 12 ist allerdings begrenzt. So findet einerseits oberhalb einer NOₓ-Desorptionstemperatur eine NOₓ-Desorption statt und andererseits ist beim Erreichen bestimmter NOₓ- und SOₓ- Beladungszustände eine NOₓ-Speicherfähigkeit erschöpft. Eine Regenerationsnotwendigkeit des NOₓ-Speicherkatalysators 12 kann beispielsweise mit Hilfe der von den Sensoren 18 und 20 gelieferten Signale, die eine Katalysatortemperatur und/oder eine NOₓ-Emission nach dem NOₓ-Speicherkatalysator 12 erfassen, signalisiert werden. Die Regenerationsnotwendigkeit kann nach einem anderen Ausführungsbeispiel auch direkt durch das Motorsteuergerät 22 anhand geeigneter Modellrechnungen ermittelt werden. Diese Verfahren zur Bestimmung der Regenerationsnotwendigkeit sind bekannt und sollen daher im Rahmen der vorliegenden Beschreibung nicht näher erläutert werden.

Nachdem durch das Motorsteuergerät 22 die Regenerationsnotwendigkeit des NOₓ-Speicherkatalysators 12 erkannt ist, wird eine Umschaltung der Verbrennungskraftmaschine 16 in einen Regenerationsbetrieb ausgelöst. Während dieses Regenerationsbetriebes muss die Bereitstellung einer ausreichend großen Menge an Reduktionsmitteln, insbesondere CO, HC oder H₂, und das Erreichen der Desorptionstemperatur sichergestellt sein.

Die Regenerierung des NOₓ-Speicherkatalysators 12 ist nur bei speziellen Voraussetzungen möglich. Die Abgastemperatur muss innerhalb bestimmter Grenzen liegen und es muss der NOₓ-Speicherkatalysator 12 mit ausreichendem Reduktionsmittel CO durchströmt werden. Die Einhaltung der Temperatur wird beispielsweise über eine Mittelwertberechnung der von dem Temperatursensor 18 gelieferten Temperatursignale überwacht.

Die Regenerierung des NOₓ-Speicherkatalysators 12 soll während des normalen Fahrbetriebes der Verbrennungskraftmaschine 16 erfolgen, ohne dass dies Auswirkungen auf das Fahrverhalten des Kraftfahrzeugs hat. Um diese Voraussetzung einzuhalten, muss die Regenerierung des NOₓ-Speicherkatalysators 12 hauptsächlich im Schubbetrieb beziehungsweise im Teillastbetrieb der Verbrennungskraftmaschine 16 erfolgen. Das Erkennen des Schubbetriebes beziehungsweise Teillastbetriebes der Verbrennungskraftmaschine 16 kann durch geeignete Sensoren, beispielsweise Pedalwertgeber, und/oder Kraftstoffeinspritzmenge des Kraftstoffeinspritzsystems 30 ermittelt werden. Selbstverständlich sind weitere Möglichkeiten der Erfassung der momentanen Betriebssituation der Verbrennungskraftmaschine 16 möglich, beispielsweise Drehzahlauswertungen, Bremsaktivierungen oder dergleichen.

Ist beispielsweise die zur Regenerierung notwendige Abgastemperatur nicht erreicht, kann ein Spritzbeginn der Kraftstoffeinspritzung beeinflusst werden, um die Abgastemperatur zu erhöhen. Ferner kann die Abgastemperatur durch Regelung der Abgasrückführung beeinflusst werden.

Für die eigentliche Regenerierung des NOₓ-Speicherkatalysators 12 wird zunächst der aktuelle Lambdawert über den Gassensor 20 ermittelt. Soll der Lambdawert rechnerisch ermittelt werden, ist das Abgasrückführungsventil 28 zu schließen. Ferner wird die in das Motorsteuergerät 22 integrierte sogenannte Schubabschaltung deaktiviert, falls die Regenerierung im Schubbetrieb der Verbrennungskraftmaschine 16 erfolgen soll. Bei Regenerierung des NOₓ-Speicherkatalysators 12 im Teillastbetrieb darf die Schubabschaltung nicht deaktiviert werden.

Anschließend wird über das Motorsteuergerät 22 die Drosselklappe 26 angesteuert und die freie Querschnittsfläche des Ansaugkanals 24 verringert. Hierdurch wird die Ansaugluftzufuhr zum Verbrennungsprozess gedrosselt. Gleichzeitig mit der Drosselung des Ansaugluftquerschnittes wird die Kraftstoffeinspritzmenge in Abhängigkeit der Stellung der Drosselklappe 26 verändert. Da im Schubbetrieb der Verbrennungskraftmaschine 16 üblicherweise keine Kraftstoffeinspritzung erfolgt, muss bei Regenerationsbetrieb des NOₓ-Speicherkatalysators 12 im Motorsteuergerät 22 eine entsprechende Umschaltung vorgenommen werden. Die Einspritzung von Kraftstoff bei gleichzeitiger Drosselung des Ansaugluftquerschnittes ist erforderlich, um eine gravierende Drehmomentänderung der Verbrennungskraftmaschine 16 zu vermeiden. Hierzu ist eine Drehmomentregelung vorgesehen, die in Abhängigkeit der Stellung der Drosselklappe 26 eine entsprechende Menge Kraftstoff in die Brennkammer der Verbrennungskraftmaschine 16 einspritzt. Zur Drehmomentregelung kann das aktuelle Drehmoment errechnet werden, beispielsweise mit Hilfe der Drehzahl, der Einspritzmenge und der Drosselklappenstellung der Verbrennungskraftmaschine 16. Dieses errechnete aktuelle Drehmoment wird mit einem Sollmoment verglichen und aus der Abweichung die Änderung der Kraftstoffeinspritzmenge ermittelt. Eine im normalen Fahrbetrieb vorgesehene Mengenbegrenzung ist hierbei deaktiviert. Ein Grenzwert für die maximale Einspritzmenge wird lediglich durch eine sogenannte Rußbegrenzung vorgegeben, die das Ansteigen von Rußpartikeln im Abgas der Verbrennungskraftmaschine verhindert.

Die Stellung der Drosselklappe 26 und die Kraftstoffeinspritzmenge werden während des Regenerationsbetriebes so eingeregelt, dass sich eine Luftzahl λ < 1 (das heißt ein Luftmangel) ergibt, so dass im vermehrten Maße Reduktionsmittel, wie insbesondere CO, entstehen und den NOₓ-Speicherkatalysator 12 durchströmen können. Hierbei muss ein Sollwert der CO-Durchströmung erreicht werden, um die Regeneration des NOₓ-Speicherkatalysators 12 zu erzielen. Nach Schließen der Drosselklappe 26 ist, damit genügend CO entstehen kann, eine Mengenerhöhung der Einspritzmenge des Kraftstoffes notwendig. Hierzu wird, wie bereits erwähnt, die Mengenbegrenzung während des normalen Fahrbetriebes abgeschaltet. Das Drehmoment der Verbrennungskraftmaschine 16 bestimmt sich im Wesentlichen aus der pro Arbeitstakt im Zylinder verbrannten Kraftstoffmasse. Das Luft-Kraftstoff-Verhältnis des Verbrennungsprozesses muss während des Regenerationsprozesses des NOₓ-Speicherkatalysators 12 so weit im Luftmangelbereich liegen, dass genügend CO gebildet wird.

Nachdem die Drosselklappe 26 geschlossen ist und die auf die Stellung der Drosselklappe 26 abgestimmte Menge an Kraftstoff über das Einspritzsystem 30 zugeführt ist, erfolgt die Einstellung der notwendigen CO-Durchströmung durch Regelung des Abgasrückführungsventils 28. Hierdurch wird eine mehr oder weniger große Menge an Abgas dem Verbrennungsprozess zugeführt, so dass bei erfolgter Drehmomentregelung zur Konstanthaltung des Drehmomentes dennoch eine notwendige CO-Durchströmung erreicht wird. Durch Veränderung des freien Durchlassquerschnittes des Abgasrückführungsventils 28 wird die Abgasmenge, die dem Verbrennungsprozess zugeführt wird, bestimmt. Hierdurch ändert sich der Lambdawert des Abgases, der durch den Gassensor 20 erfasst wird. Anhand dieses erfassten Lambdawertes wird die tatsächliche CO-Durchströmung durch den NOₓ-Speicherkatalysator 12 durch das Motorsteuergerät 22 ermittelt, so dass durch Ansteuerung des Abgasrückführungsventils 28 wiederum die benötigte CO-Durchströmung geregelt werden kann.

Neben Messen des aktuellen Lambdawertes durch den Gassensor 20 kann optional auch eine Berechnung des aktuellen Lambdawertes durch das Motorsteuergerät 22 erfolgen. Diese Berechnung kann anhand bekannter Modelle durch die Stellung der Drosselklappe 26, die Kraftstoffeinspritzmenge und die Ansteuerung des Abgasrückführungsventils 28 erfolgen. Hierbei sind jedoch gegenüber der Messung des tatsächlichen Lambdas durch den Gassensor 20 Fehler zu erwarten.

Der Entladungszustand des NOₓ-Speicherkatalysators 12 kann aus dem Zusammenhang der Durchströmungsmenge des Reduktionsmittels CO, abhängig vom gemessenen beziehungsweise errechneten Lambdawert, der durch die Stellung der Drosselklappe 26 definierten Frischluftmenge und der Zeit ermittelt werden. Ist die Regenerierung des NOₓ-Speicherkatalysators 12 abgeschlossen, wird über das Motorsteuergerät 22 die Verbrennungskraftmaschine 16 vom Regenerationsbetrieb wieder in den normalen Arbeitsmodus - also üblicherweise den Magerbetrieb mit λ > 1-geschaltet.

Alles in allem wird deutlich, dass durch die Regelung der Abgasrückführung während des Regenerationsbetriebes des NOₓ-Speicherkatalysators 12 eine ausreichende Mengendurchströmung mit dem Reduktionsmittel CO erreicht wird und gleichzeitig durch Einstellung des Luft-Kraftstoff-Verhältnisses durch Anpassung der Kraftstoffeinspritzung an die Stellung der Drosselklappe 26 eine im Wesentlichen drehmomentunbeeinflusste Regeneration des NOₓ-Speicherkatalysators 12 erfolgen kann.

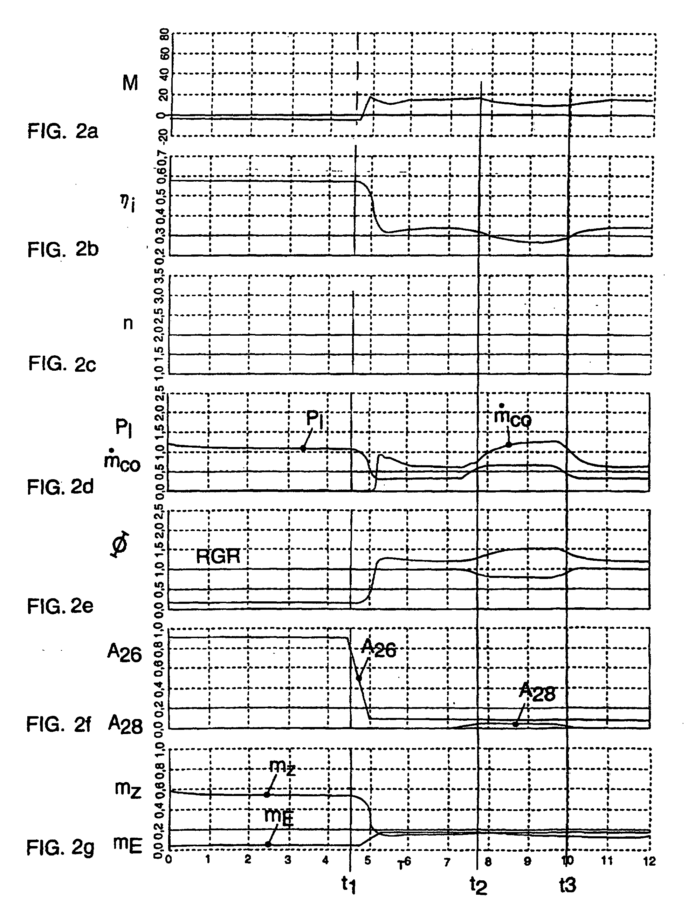

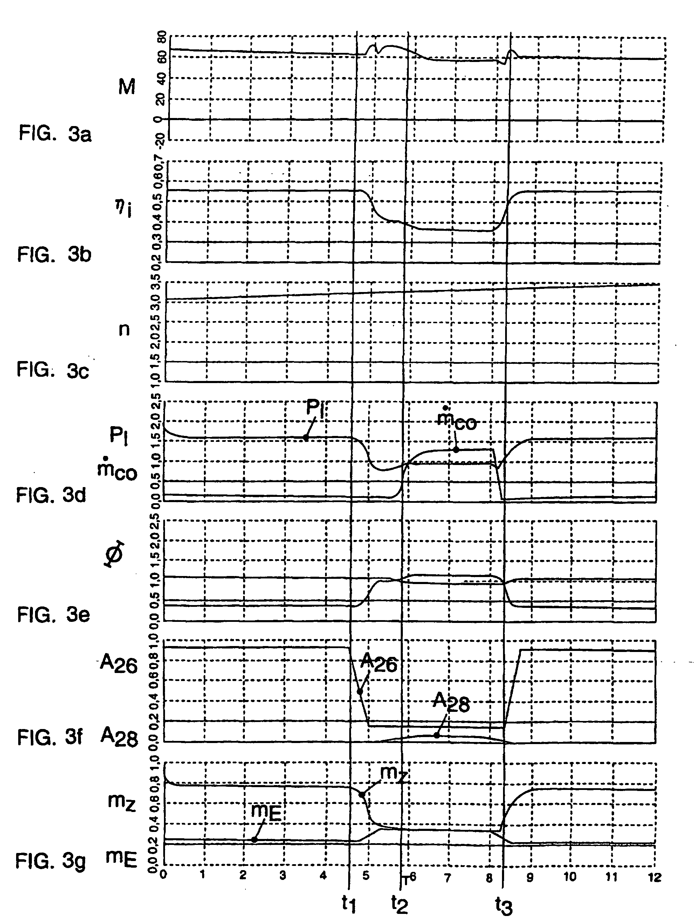

Die erläuterten Zusammenhänge werden nachfolgend anhand der Figuren 2 und 3 verdeutlicht. In Figur 2 sind Kennlinien für einen Schubbetrieb und in Figur 3 Kennlinien für einen Teillastbetrieb der Verbrennungskraftmaschine 16 dargestellt. Die Figuren 2a beziehungsweise 3a zeigen den Verlauf des Drehmomentes M der Verbrennungskraftmaschine 16 über der Zeit, die Figuren 2b und 3b zeigen den Verlauf des inneren Motorwirkungsgrades über der Zeit, die Figuren 2c und 3c zeigen den Verlauf der Drehzahl n der Verbrennungskraftmaschine 16 über der Zeit, die Figuren 2d und 3d zeigen den Verlauf des Ladedrucks p_{L} im Ansaugkanal 24 und den CO-Massenstrom m_{CO} im NOₓ-Speicherkatalysator 12 über der Zeit, die Figuren 2e und 3e zeigen den Verlauf des Äquivalenzverhältnisses Φ = 1 / λ und den Reinheitsgrad der Ansaugluft über der Zeit, die Figuren 2f und 3f zeigen die Stellung A₂₆ der Drosselklappe 26 und die Stellung A₂₈ des Abgasrückführungsventils 28 über der Zeit und die Figuren 2g und 3g zeigen die Gasmenge im Zylinder m_{Z} und die KraftstoffEinspritzmenge m_{E} pro Zylinder, multipliziert mit dem Faktor Lₘᵢₙ = 14,7 der Verbrennungskraftmaschine über der Zeit.

Anhand der Figuren 2a bis 2g für den Schubbetrieb der Verbrennungskraftmaschine 16 wird deutlich, dass zu einem Zeitpunkt t₁ der Regenerationsprozess des NOₓ-Speicherkatalysators 12 beginnt. Anhand des Verlaufes der Kennlinie für die Drosselklappe A₂₆ wird deutlich, dass zum Zeitpunkt t₁ die Drosselklappe 26 geschlossen wird. Die Drehzahl n der Verbrennungskraftmaschine 16 bleibt annähernd konstant, da das Motordrehmoment in der Nähe von Null liegt. Gleichzeitig sinkt der Ladedruck p_{L} gemäß Kennlinie 2d im Ansaugrohr 24 entsprechend der Schließstellung der Drosselklappe 26 ab. Das Drehmoment M gemäß Figur 2a neigt zum Ansteigen, da gleichzeitig mit Änderung der Stellung der Drosselklappe 26 (A₂₆, Figur 2f) die Einspritzmenge an Kraftstoff m_{E} gemäß Figur 2g erhöht wird.

Das Abgasrückführungsventil 28 ist zum Zeitpunkt t₁ geschlossen (Figur 2f).

Nach Einleitung des Regenerationsprozesses des NOₓ-Speicherkatalysators 12 wird zum Zeitpunkt t₂ das Abgasrückführungsventil 28 geöffnet. Hierdurch kommt es zu einem Luftmangel (Äquivalenzverhältnis Φ deutlich größer als Eins) und damit zu einer Durchflussmengenerhöhung des Reduktionsmittels CO (Figur 2d), so dass genügend Reduktionsmittel zur Regeneration des NOₓ-Speicherkatalysators 12 zur Verfügung steht. Nach Abschluss des Regenerationsprozesses zum Zeitpunkt t₃ wird das Abgasrückführungsventil 28 wieder geschlossen (Figur 2f). Die CO-Durchlassmenge m_{CO} sinkt dann wieder auf den entsprechend dem eingestellten Luft-Kraftstoff-Verhältnis entsprechenden Wert. Anhand dieser Kennlinie wird nochmals deutlich, dass durch temporäres Öffnen des Abgasrückführungsventils 28 während des Regenerationsprozesses des NOₓ-Speicherkatalysators 12 auf die CO-Durchflussmenge Einfluss genommen werden kann.

In Figur 3a bis 3g sind die jeweiligen Kennlinien für einen Teillastbetrieb der Verbrennungskraftmaschine 16 eingetragen. Zum Zeitpunkt t₁ erfolgt wiederum die Einleitung des Regenerationsbetriebes des NOₓ-Speicherkatalysators 12 durch Schließen der Drosselklappe 26 (Figur 3f). Gleichzeitig wird die Einspritzmenge m_{E} des Kraftstoffes (Figur 3g) zur im Wesentlichen Konstanthaltung des Drehmomentes M der Verbrennungskraftmaschine 16 (Figur 3a) in Abhängigkeit von der Drosselklappenstellung geregelt. Zum Zeitpunkt t₂ erfolgt die Öffnung des Abgasrückführungsventils 28 (Figur 3f), so daß es zu einer Anhebung der CO-Durchflussmenge m_{CO} auf den notwendigen Wert zur Regenerierung des NOₓ-Speicherkatalysators 12 kommt.

Der Verlauf des Motordrehmoments in Figur 3a zeigt, dass es im Teillastbetrieb möglich ist, durch aufeinander abgestimmtes Schließen der Drosselklappe A₂₆ und Öffnen des Abgasrückführventils A₂₈ CO zur Regeneration des Katalysators zur Verfügung zu stellen, ohne dass sich das Motordrehmoment für den Fahrer spürbar verändert.

## Patentansprüche

1. Verfahren zur Regelung eines Arbeitsmodus einer Verbrennungskraftmaschine (16) eines Kraftfahrzeuges während einer Regeneration eines in einem Abgaskanal der Verbrennungskraftmaschine (16) angeordneten NOₓ-Speicherkatalysators, (12), wobei zur Regeneration des NOₓ-Speicherkatalysators (12) eine Ansaugluftzufuhr zu der Verbrennungskraftmaschine (16) gedrosselt und eine Kraftstoffeinspritzmenge (m_{E}) erhöht wird, um ein Verhältnis von Kraftstoff zu Sauerstoff mit λ ≤ 1 in einem der Verbrennungskraftmaschine (16) zugeführten Kraftstoff-Luft-Gemisch einzustellen, und wobei während des Regenerationsbetriebes die Einstellung des Luft-Kraftstoff-Verhältnisses drehmomentgeregelt durchgeführt wird und zumindest zeitweise eine Abgasrückführung zu der Verbrennungskraftmaschine (16) erfolgt, **dadurch gekennzeichnet, dass** im Regenerationsbetrieb die Drosselung der Ansaugluftzufuhr und die Durchführung der Abgasrückführung derart aufeinander abgestimmt werden, dass das Drehmoment (M) der Verbrennungskraftmaschine (16) im Wesentlichen konstant gehalten wird.

2. Verfahren nach Anspruch 1, **dadurch gekennzeichnet, dass** ein aktuelles Drehmoment mit einem Sollmoment verglichen wird und aus der Abweichung eine Änderung der Kraftstoffeinspritzmenge und/oder eine Drosselung eines Ansaugquerschnittes und/oder Änderung eines Durchlassquerschnittes eines Abgasrückführventils (28) zur Drehmomentregelung berechnet wird.

3. Verfahren nach Anspruch 1 oder 2, **dadurch gekennzeichnet, dass** während des Regenerationsbetriebes eine Mengenbegrenzung der Kraftstoffeinspritzung aufgehoben ist.

4. Verfahren nach einem der vorhergehenden Ansprüche, **dadurch gekennzeichnet, dass** zur Bestimmung einer CO-Durchströmung des NOₓ-Speicherkatalysators (12) während des Regenerationsbetriebes der aktuelle Lambdawert gemessen wird.

5. Verfahren nach einem der vorhergehenden Ansprüche, **dadurch gekennzeichnet, dass** zur Bestimmung einer während des Regenerationsbetriebes benötigten Abgasmenge der aktuelle Lambdawert errechnet wird.

## Claims

1. Method for controlling an operating mode of a combustion engine (16) in a motor vehicle during a regeneration of an NOₓ storage catalyst (12) arranged in an exhaust duct of the combustion engine (16), wherein, in order to regenerate the NOₓ storage catalyst (12), a supply of intake air to the combustion engine (16) is throttled and a quantity of fuel injected (m_{E}) is increased in order to adjust to λ≤1 a ratio of fuel to oxygen in a fuel-air mixture supplied to the combustion engine (12) and wherein, during the regeneration mode, the adjustment of the air-fuel ratio is controlled with reference to the rotary moment, and, exhaust gas is at least partially recirculated to the combustion engine (16), **characterised in that**, in the regeneration mode, the throttling of the supply of intake air and the implementation of the exhaust-gas recirculation are tuned to one another in such a manner that the rotary moment (M) of the combustion engine (16) is essentially kept constant.

2. Method according to claim 1, **characterised in that**, a current rotary moment is compared with a target moment and from the difference, a change in the quantity of fuel injected and/or a throttling of an air intake cross-section and/or a change in a throughput cross-section of an exhaust recirculation valve (28) is calculated in order to control the rotary moment.

3. Method according to claim 1 or 2, **characterised in that** during the regeneration mode, a limit on the quantity of fuel injected is raised.

4. Method according to any one of the preceding claims, **characterised in that,** the current lambda value is measured in order to determine a throughput of CO through the NOₓ storage catalyst (12) during the regeneration mode.

5. Method according to any one of the preceding claims, **characterised in that** the current lambda value is calculated in order to determine a quantity of exhaust gas required during the regeneration mode.

## Revendications

1. Procédé de réglage d'un mode de fonctionnement d'un moteur à combustion interne (16) d'un véhicule automobile pendant une régénération d'un catalyseur de stockage à NOx (12) disposé dans un tuyau d'échappement du moteur à combustion interne (16) dans lequel, pour la régénération du catalyseur de stockage à NOx (12), une arrivée d'air d'aspiration sur le moteur à combustion interne (16) est étranglée et une quantité de carburant injectée (m_{g}) est accrue pour régler un rapport entre le carburant et l'oxygène de λ ≤ 1 dans un mélange de carburant et d'air amené au moteur à combustion interne (16) et dans lequel, pendant le mode de régénération, le réglage du rapport entre l'air et le carburant est effectué avec une régulation du couple et un retour des gaz d'échappement vers le moteur à combustion interne (16) a lieu au moins par moments, **caractérisé en ce que**, pendant le mode de régénération, l'étranglement ou la réduction variable de l'arrivée d'air d'aspiration et la réalisation du retour des gaz d'échappement sont accordées de telle manière entre eux que le couple (M) du moteur à combustion interne (16) est maintenu sensiblement constant.

2. Procédé selon la revendication 1, **caractérisé en ce que** qu'un couple momentané est comparé avec un couple de consigne et **en ce qu'**à partir de la divergence sont calculés une modification de la quantité de carburant injectée et/ou un étranglement ou une réduction variable d'une section d'aspiration et/ou une modification d'une section de passage d'une vanne de retour des gaz d'échappement (28) pour la régulation du couple.

3. Procédé selon la revendication 1 ou 2, **caractérisé en ce que**, pendant le mode de régénération, une limitation de la quantité de carburant injecté est annulée.

4. Procédé selon l'une quelconque des revendications précédentes, **caractérisé en ce que** la valeur lambda du moment est mesurée pour la détermination d'un flux de passage de CO dans le catalyseur de stockage à NOx (12) pendant le mode de régénération.

5. Procédé selon l'une quelconque des revendications précédentes, **caractérisé en ce que** la valeur lambda du moment est calculée pour la détermination d'une quantité de gaz d'échappement nécessaire pendant le mode de régénération.
